(19) **Europäisches Patentamt**

**European Patent Office**

**Office européen des brevets**

(11) Numéro de publication: **0 185 826**
**B1**

(12) **FASCICULE DE BREVET EUROPÉEN**

(45) Date de publication du fascicule du brevet:
10.08.88

(21) Numéro de dépôt: **84402630.2**

(22) Date de dépôt: **18.12.84**

(51) Int. Cl.⁴: **A 01 D 87/12**

(54) Dispositif élévateur pour chargeurs de tracteurs agricoles.

(30) Priorité: **26.10.84 FR 8416472**

(43) Date de publication de la demande:
**02.07.86 Bulletin 86/27**

(45) Mention de la délivrance du brevet:
**10.08.88 Bulletin 88/32**

(84) Etats contractants désignés:
**AT BE CH DE GB IT LI LU NL SE**

(56) Documents cité:
**EP-A-0 055 186**
**DE-A-3 112 637**
**FR-A-2 520 715**
**US-A-3 368 706**
**US-A-4 358 241**

(73) Titulaire: **Mailleux, Louis Marie Joseph, 19 rue de Rennes, F-35690 Acigné (FR)**
Titulaire: **Mailleux, André Ange, 19 rue de Rennes, F-35690 Acigné (FR)**

(72) Inventeur: **Mailleux, Louis Marie Joseph, 19 rue de Rennes, F-35690 Acigné (FR)**
Inventeur: **Mailleux, André Ange, 19 rue de Rennes, F-35690 Acigné (FR)**

(74) Mandataire: **Madeuf, René Louis, Cabinet Madeuf 3, Avenue Bugeaud, F-75116 Paris (FR)**

## Description

La présente invention concerne un nouveau dispositif élévateur pour chargeurs de tracteurs agricoles.

Il est courant dans la technique de faire comporter aux tracteurs agricoles ou véhicules analogues des chargeurs amovibles à l'extrémité desquels peuvent être montés différents outils, tels que des bennes, des fourches ou analogues.

On connaît également de nombreuses réalisations de dispositifs élévateurs qui comportent des outils de préhension et qui sont montés à l'extrémité du chargeur d'un tracteur.

Ces dispositifs élévateurs sont utilisés notamment pour la manutention de balles de fourrage et de paille, que celles-ci soient de forme cylindrique ou parallélépipédique.

Les balles réalisées sont de plus en plus lourdes et nécessitent, par conséquent, l'emploi de matériel mécanique pour leur transport et leur rangement sous des hangars.

Lorsque des outils de préhension sont montés directement à l'extrémité d'un, chargeur, la course dont dispose l'utilisateur est relativement faible, ce qui empêche d'empiler les balles ou autres objets sur une hauteur suffisante.

Lorsqu'un dispositif élévateur annexe est monté à l'extrémité du chargeur, la charge que constitue la balle ou un autre objet parcourt fréquemment une trajectoire qui augemente considérablement le porte-à-faux et ce qui amène à devoir faire comporter un lest de compensation au tracteur.

De plus, les dispositifs chargeurs connus sont souvent fragiles et résistent mal à des efforts de torsion ou de gauchissement auxquels ils peuvent être soumis si, par inadvertance, l'opérateur heurte la charpente d'un hangar pendant la manutention d'une balle et alors que le chargeur est en position haute.

Des problèmes se posent également pour la prise des balles au sol, notamment lorsqu'il y a lieu de faire pivoter les balles ou autres objets, comme cela peut se produire en ce qui concerne des balles cylindriques ou la manutention de fûts.

La technique antérieure a notamment fait connaître le document EP-A-0 055 186 qui décrit une potence disposée à l'extrémité des bras d'un chargeur et qui comporte une pièce dirigée vers un tracteur et une bascule prenant appui de façon articulée sur cette pièce, cette bascule étant en outre supportée et actionnée par un vérin relié à la potence, de sorte que la bascule fait pivoter et soulever l'outil (griffe) auquel elle est fixée. De même, mais dans une disposition quelque peu différente, un dispositif élévateur comportant une potence articulée directement sur les bras d'un chargeur pour le support d'un outil est connu par le document DE-A-3 112 637.

La présente invention résout le problème exposé dans ce qui précède et crée un dispositif élévateur qui n'augmente pas sensiblement le porte-à-faux par rapport à celui du chargeur et qui maintient ce porte-à-faux constant ou le réduit au fur et a mesure de l'élévation de la charge.

L'invention se rapporte ainsi plus particulièrement à un dispositif élévateur pour chargeu-de-tracteu-agricoles à bras de levage, ledit dispositif étant monté en lieu et place d'un outil que comporte habituellement le chargeur et comprenant au moins une potence pour le support d'au moins un organe mobile relié à un outil de préhension, cette po tence étant directement articulée sur les bras du chargeur et maintenue sensiblement verticale sur ceux-ci.

Dans un tel dispositif élévateur, l'organe mobile est une bascule et cette bascule comprend au moins un cadre rigide allongé disposé en position basse en porte à faux sur la potence, reposant alors sur ou butant contre une butée de la potence même par un point intermédiaire de sa longueur, l'extrémité éloignée vis-à-vis du tracteur de ce cadre allongé portant l'outil de préhension dans son entier, tandis que l'extrémité opposée tournée vers le tracteur est soit articulée en permanence soit maintenue et guidée durant une partie de son mouvement le long d'un organe, qui fait substantiellement saillie vers le tracteur sur la partie haute de la potence, ladite bascule étant en outre supportée sur un point de sa longueur entre ces deux extrémités du cadre allongé et actionné par un vérin relié à la potence de sorte que ladite bascule fait pivoter l'outil de préhension auquel elle est fixée et fait soulever ledit outil de préhension lors du développement du vérin.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation en partie schématique du dispositif élévateur pour chargeur de tracteur agricole réalisé conformément à l'invention.

La fig. 2 est une élévation partielle schématique d'un ensemble à griffes mobiles que comporte le dispositif de la fig. 1 et qui est vu suivant la ligne II-II de cette figure.

La fig. 3 est une élévation analogue à la fig. 1, illustrant des positions caractéristiques du dispositif élévateur.

La fig. 4 est une élévation analogue à la fig. 1 d'une variante.

Les fig. 5, 6 et 7 sont des élévations illustrant des positions caractéristiques de travail.

La fig. 8 est une élévation analogue à la fig. 1 d'une autre variante.

La fig. 9 est un plan, vu de dessus, corresondant à la fig. 8.

Les fig. 10 et 11 sont des élévations, analogues à la fig. 8, illustrant des positions caractéristiques.

Au dessin, 1 désigne un tracteur agricole qui comporte, sur ses deux côtés latéraux, des supports 2 pour un chargeur désigné dans son ensemble par 3, chargeur qui peut par exemple comporter deux bras 4 dont un seul apparaît au dessin, ces bras étant articulés sur un axe et pouvant etre soulevés au moyen de vérins 6.

Les bras 4 du chargeur sont reliés, par exemple, par des sabots fixes ou extensibles 7, 8, à un attelage 9 qui est interchangeable et qui fait partie d'un accessoire devant être attelé au chargeur, cet accessoire pouvant être constitué par une benne ou, comme dans le cas de l'objet de la présente invention, par le dispositif élévateur désigné dans son ensemble par 10.

Afin que l'attelage 9 soit maintenu toujours sensiblement vertical, le chargeur 3 comporte des moyens appropriés, par exemple des bielles 11 disposées de part et d'autre des bras 4 et reliées au support 2. Ce qui précède n'est décrit qu'à titre d'exemple étant donné que les chargeurs peuvent présenter des configurations extrêmement diverses.

L'attelage 9 est constitué par un bâti, par exemple rectangulaire, à partir duquel font saillie des flasques 12 qui sont reliés aux bras 4 et aux bielles 11. Le bâti 9 qui forme l'attelage constitue en même temps des potences 13 dont une seule apparaît au dessin, ces potences étant reliées entre elles par des traverses 14, 14a, 14b...14n.

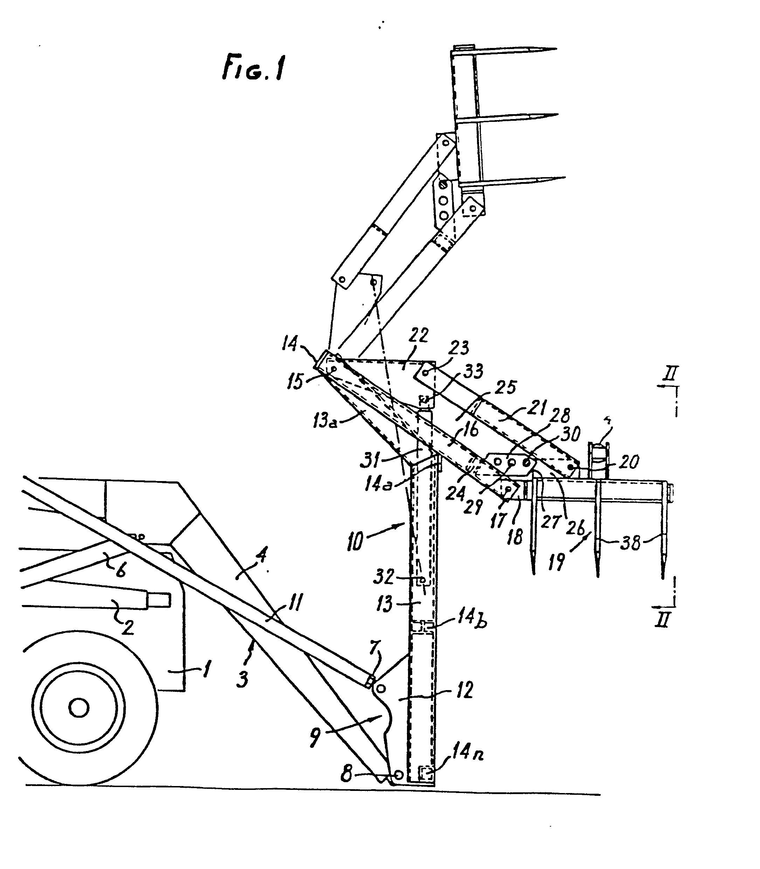

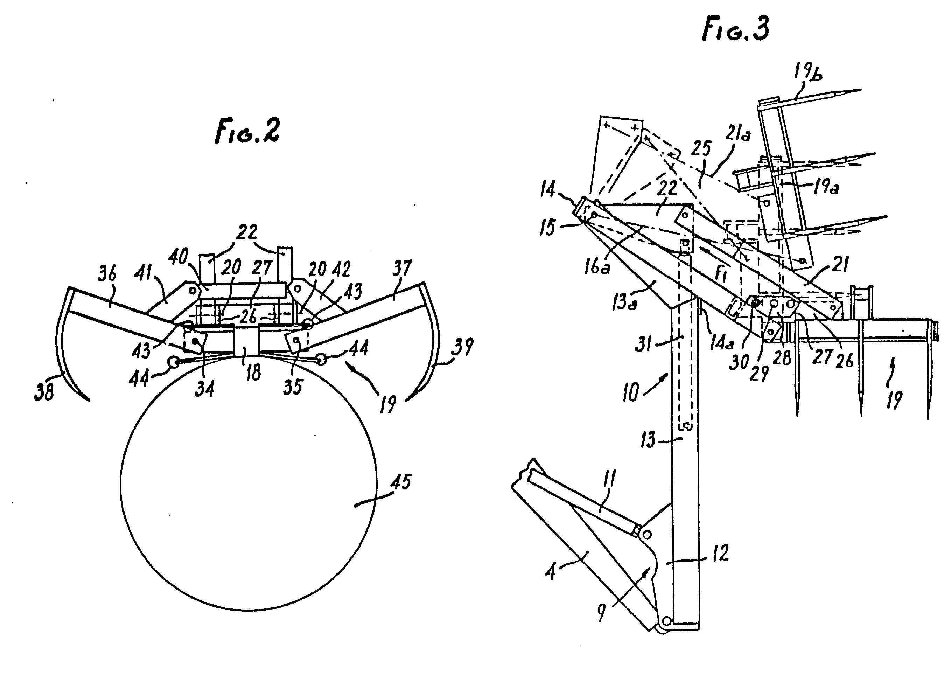

Dans le mode de réalisation des fig. 1 et 3, les potences 13 présentent un segment incliné 13a, par exemple à 45° par rapport à l'horizontale et qui est dirigé vers le tracteur 1. Chacune des potences est reliée par un point d'appui articulé 15 à des bielles 16 dont une seule est visible au dessin. Les bielles 16 sant, par ailleurs, articulées sur des axes 17 portés par le bâti 18 d'un outil 19 constitué dans l'exemple représenté par un ensemble de préhension à griffes.

Le bâti 18 est également relié par des axes 20 à deux bielles 21 (fig. 1 et 2) dont la tête est articulée à un balancier 22 par des axes 23. Les bielles 16 et 21 comportent des traverses de liaison, comme celles représentées en 24, pour constituer des cadres rigides susceptibles de résister à des efforts de torsion qui peuvent se produire lorsque l'outil 19 est chargé et que les bielles qui constituent avec le balancier 22 une bascule 25 sont déplacées, comme expliqué dans ce qui suit.

Les axes 20 des bielles 21 sont portés par des flasques 26 reliés entre eux pour former une butée 27.

Les bielles 16 supportent une entretoise mobile 28 qui, dans la réalisation représentée, est constituée par des ferrures percées de trous 29 pour la mise en place de broches 30 pouvant occuper à chaque fois l'une des trois positions illustrées aux fig. 1 et 3. L'entretoise mobile pourrait aussi être constituée sous la forme d'une butée à-vis ou encore par un vérin.

Pour la manoeuvre de la bascule 25, un vérin 31, de préférence à double effet, est disposé entre les potences sur un axe 32 et il est relié, par ailleurs, au moyen d'un second axe 33 au balancier 22.

Lorsque l'outil est constitué comme représenté à la fig. 2 par un ensemble de préhension, par exemple pour des balles ou bottes de fourrage, le bâti 18 supporte des axes 34, 35 sur lesquels sont articulés des bras de support 36, 37 de griffes 38, 39. Les bras 36, 37 sont reliés entre eux par un vérin hydraulique 40 articulé sur des pattes 41, 42 que comportent les bras 36, 37.

Le bâti 18 comporte par ailleurs des butées de fin de course 43, 44 disposées de part et d'autre des bras 36, 37. Le rayon de courbure des griffes 38, 39 correspond à la longueur utile des bras 36, 37 pour que lesdites butées puissent pénétrer dans les balles de fourrage sans les détériorer.

Le dispositif fonctionne de la façon suivante: Au repos les bielles 16 reposent sur la traverse 14a. Il est tout d'abord supposé que les broches 30 se trouvent dans le trou le plus proche des bielles 21, comme illustré à la fig. 1. En actionnant le vérin 31, celui-ci soulève le balancier 22. Les broches 30 étant contre la butée 27 du bâti 18, l'angle fait par les bielles 16 et 21 avec le bâti 18 ne peut pas être modifié. Par conséquent, l'ensemble bascule au fur et à mesure de la montée du vérin pour venir occuper la position illustrée en trait fin à la partie haute de la fig. 1, position pour laquelle l'outil 19 a été pivoté d'un peu plus de 90°.

Comme le montre bien le dessin, du fait que les potences forment un segment incliné 13a tourné vers le tracteur, les bielles 16 et 21 de la bascule 25 peuvent être longues sans qu'il en résulte un porte-à-faux important pour l'outil 19 et, par conséquent, celui-ci peut supporter une charge élevée.

Lors du mouvement d'élévation et de basculement de l'ensemble de la bascule 25 et de l'outil 19, le porte-à-faux est encore réduit, ce qui fait que le tracteur 1 n'est pas déséquilibré.

Lorsqu'il n'est pas nécessaire que le dispositif élévateur ait une course en hauteur aussi importante, les broches 30 sont disposées dans le trou intermédiaire 29 ou dans l'autre trou d'extrémité, comme illustré par la fig.3.

Dans ce cas, lors du soulèvement du vérin 31, le balancier 22 en pivotant entraîne tout d'abord les bielles 21 dans le sens de la flèche $f_1$, ce qui a pour effet de faire basculer l'outil 9 jusqu'à la position 9a pour laquelle cet outil a pivoté de 90° avant que les butées 27 viennent en contact des broches 30. Si le vérin 31 continue à être pivoté, il y a un basculement complémentaire de la bascule 25 dont les bielles viennent occuper les positions 16a et 21a pour lesquelles l'outil est en position 19b.

La fig. 3 montre bien que le porte-à-faux est diminué en permanence lors du mouvement de la bascule 25, ce qui est favorable pour le soulèvement de charges importantes.

L'outil 9 est de son côté commandé uniquement par le vérin 40.

Dans la position illustrée par la fig. 3, les bras 37 maintiennent les griffes 38, 39 écartées dans leur position maximale puisque les bras sont en appui contre les butées 43.

En supposant que l'outil doive agripper la balle illustrée en 45, le vérin 40 est ·.:..c. .t, par conséquent, il fait pivoter les ʾras ɜ6, · 7, les griffes 38, 39 pénétrant dans la balle en exécutant à l'intérieur de celle-ci un mouvement en arc de cercle de sorte que la balle est bien maintenue tout en étant en appui contre le dessous du bâti 18. Le mouvement de pénétration des griffes 38, 39 est limité par les butées 44.

Lorsque la balle a été transportée et qu'elle est déposée, soit sur l'une de ses bases, soit sur ses génératrices, le vérin 40 est rétracté, ce qui a pour effet de faire sortir les griffes qui suivent exactement le même mouvement que celui qu'elles ont parcouru précédemment pour saisir la balle. Il s'ensuit que la balle n'est pas déplacée lors de l'extraction des griffes et ce d'autant · qu'elle est maintenue contre le dessous du bâti 18.

Le mouvement d'ouverture des griffes est limité, comme expliqué ci-dessus, par les butées 43, ce qui fait qu'il n'y a aucun risque que les griffes d'un des bras restent engagées dans la balle, comme cela pourrait se produire si le mouvement des griffes n'était pas limité ou que leur commande ne soit pas dépendante l'une de l'autre.

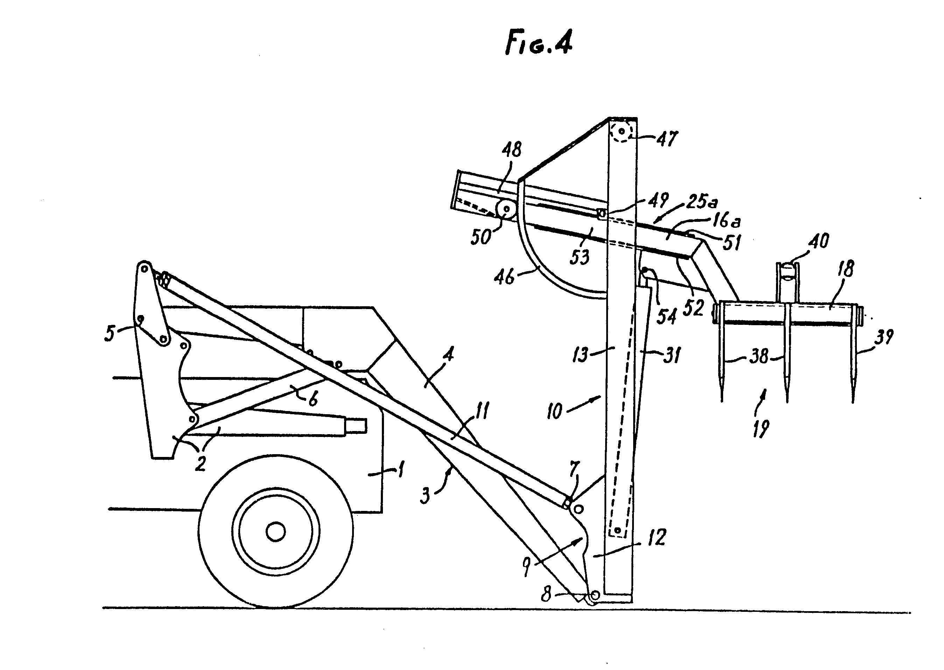

Les fig. 4 à 7 illustrent une variante selon laquelle les potences 13 ne comportent plus un segment incliné, comme le segment 13a, mais des secteurs circulaires 46 tournés vers l'arrière, c'est-à-dire vers le devant du tracteur 1, de la même façon que les segments inclinés 13a décrits dans ce qui précède.

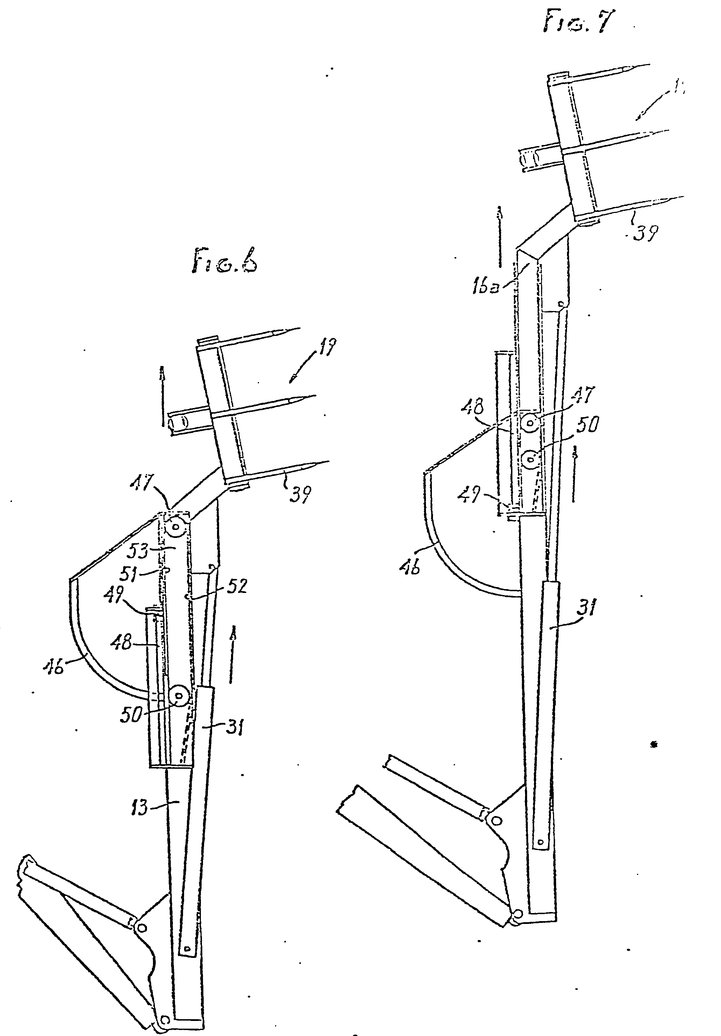

Les potences 13 sont munies, à leur partie supérieure et sur leur côté tourné l'un vers l'autre, de galets 47 dont la fonction apparaît dans ce qui suit en référence aux fig. 6 et 7.

Les secteurs circulaires 46 s'étendent jusqu'aux potences 13 en faisant saillie sur le côté interne de celles-ci. Une bascule 25a ayant la fonction de la bascule 25 des fig. 1 et 3 est constituée par un cadre comportant deux bielles parallèles 16a pouvant coulisser et pivoter. Les bielles 16a sont disposées entre les deux potences 13 et délimitent une lumière 48 dans laquelle est passé un galet 49 porté par les potences 13. Les bielles 16a comportent, en outre, chacune un rouleau 50 destiné à suivre le secteur circulaire 46 correspondant.

Le côté des bielles 16a qui est tourné vers chaque potence comporte des plaques latérales 51, 52 formant entre elles un rail creux 53 dont la largeur est très légèrement supérieure ou égale au diamètre des galets 47 portés par la partie supérieure des potences 13.

L'outil 9 est fixé par son bâti 18 à l'extrémité des bielles 16a et celles-ci sont reliées au moyen d'un axe 54 à l'extrémité du vérin 31 disposé entre les potences.

En position de repos, l'ensemble bascule 25a, outil 19, est porté par le vérin 31 qui est rétracté. Cet ensemble repose en même temps sur le galet 49 qui est maintenu au voisinage d'une des extrémités de la lumière 48 par les rouleaux 50 prenant appui sur les secteurs circulaires 46.

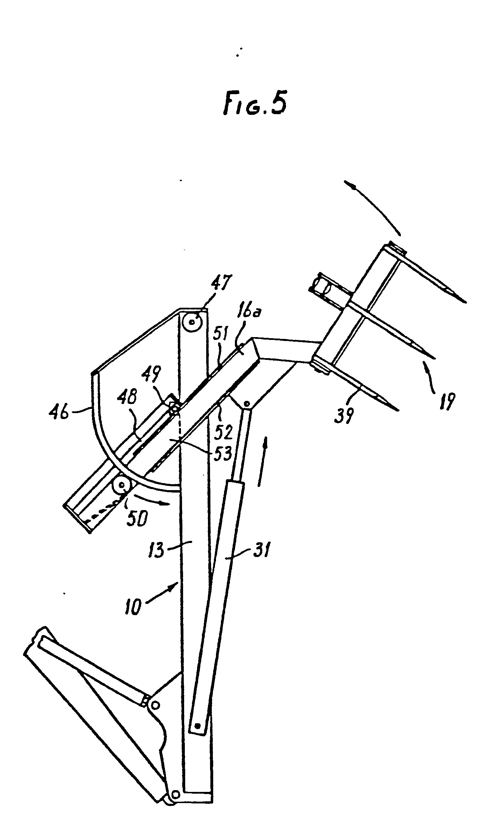

Lorsque le vérin 31 commence à être alimenté, comme l'illustre la fig. 5, cela a pour effet de faire basculer les bielles 16a qui prennent appui, contre les secteurs circulaires 46, par les rouleaux 50 tout en étant appliquées contre le galet 49.

Lorsque les rouleaux 50 ont parcouru toute la longueur du secteur circulaire 46 correspondant, ils sont amenés, comme l'illustre la fig. 6, contre la face interne des potences 13. Les bielles 16a sont alors alignées axialement avec les potences 13 de sorte que les galets 47 portés par ces dernières entrent dans le rail creux 53, ce qui fait que les bielles 16a sont alors guidées à la fois par les galets 47 et 49. En continuant à alimenter le vérin 31, les bielles 16a coulissent coaxialement aux potences 13, comme illustré par la fig. 7, tout en étant guidées par les galets 47 et 49.

Comme l'illustrent les figures de ce mode de réalisation et de la même façon que précédemment décrit, le porte-à-faux de l'outil 19 n'est jamais augmenté mais au contraire réduit depuis la position de repos jusqu'à la position la plus élevée pouvant être envisagée.

Il est important de constater que le mouvement de l'outil 19 entre les positions illustrées à la fig. 6 et celles illustrées à la fig. 7 est un mouvement de coulissement sans aucun pivotement, ce qui permet de placer l'objet supporté par l'outil 19 avec une grande précision sans qu'il y ait pour cela à agir sur le chargeur du tracteur.

Cet avantage est particulièrement appréciable pour l'empilage de balles ou d'objets analogues tels que des fûts qui peuvent être saisis dans des pinces remplaçant les griffes de l'outil décrit.

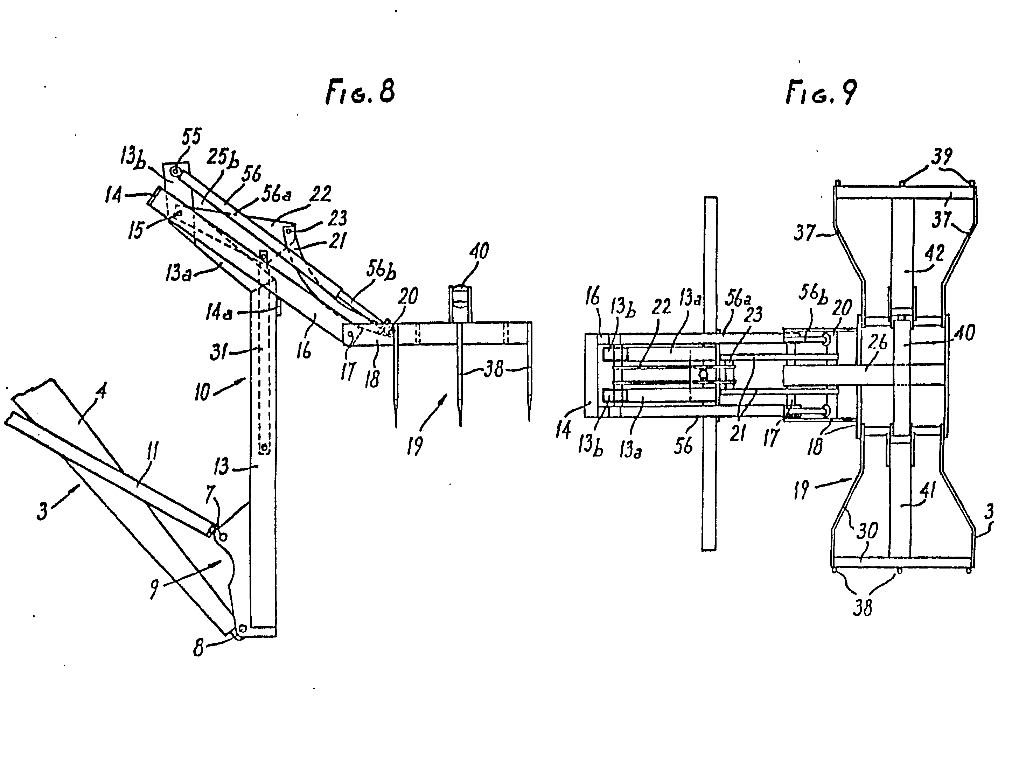

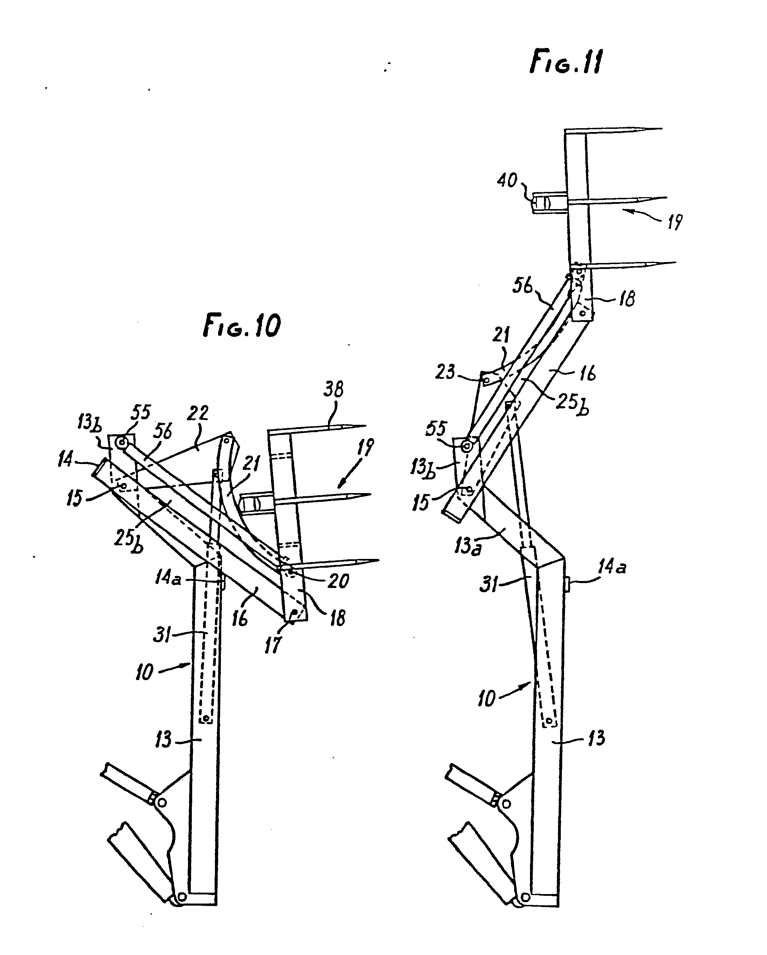

Les fig. 8 à 11 illustrent une autre variante qui constitue un développement de la réalisation suivant les fig. 1 à 3.

Comme précédemment décrit, les potences 13 supportent les bielles 16 d'une bascule 25a par leur segment incliné 13a. De plus chaque segment incliné 13a est prolongé par un segment montant 13b portant un axe 55 d'articulation de la tête des bielles télescopiques 56 qui comportent chacune un fourreau 56a et un coulisseau mobile 56b. Lorsque le coulisseau 56b est introduit télescopiquement dans le fourreau 56a, la longueur des bielles 56 est égale à la longueur utile des bielles 16.

Chaque coulisseau 56b des bielles télescopiques 56 est articulé sur l'axe 20 sur lequel sont également articulés les pieds des bielles 21 articulées, par ailleurs, sur les axes 23 portés par le balancier 22.

Au repos et comme à la fig. 1, les bielles 16 reposent sur la traverse 14a et l'outil 19 est sensiblement horizontal.

Lorsque le vérin 31 commence à être alimenté (fig. 10), le balancier 22 pivote autour du point d'appui 15 de sorte que les bielles 21 sont soulevées, ce qui provoque le basculement de l'outil 19 autour des axes 17 d'un peu plus de 90° et l'enfoncement des coulisseaux 56b dans les fourreaux 56a des bielles télescopiques 56. Lorsque les coulisseaux 56b sont complètement enfoncés, les fourreaux 56a sont en butée, l'outil

19 est basculé comme montré par la fig. 10 et les bielles 56 présentent une longueur utile égale à celle des bielles 16 de sorte qu'elles forment avec le balancier 22 et le bâti 18 de l'outil 19 un parallélogramme déformable parfait.

En continuant à alimenter le vérin 31, le parallélogramme décrit ci-dessus est déformé régulièrement, ce qui a pour effet de soulever l'outil 19 sans que son assiette soit modifiée, ce qui est représenté à la fig. 11.

Ce qui précède montre que le mouvement de basculement de l'outil 19 est effectué en premier lieu, sans élévation importante de l'outil 19 puis que le soulèvement a lieu ensuite sans changement de la position angulaire de l'outil 19, ce qui est particulièrement avantageux pour la manutention de balles de fourrage de fûts ou d'autres objets qui doivent pouvoir être posés à l'endroit désiré sans avoir à intervenir sur la position du chargeur 3.

L'invention n'est pas limité aux exemples de réalisation représentés et décrits en détail, car diverses modifications peuvent y être apportées sans sortir de son cadre. particulier, la longueur du segment incliné 13a des potences et celle des bielles faisant partie de la bascule peuvent être choisies pour permettre de saisir et poser des objets directement sur le sol au moyen de l'outil 19 ou d' un autre outil pouvant être substitué à celui représenté.

**Revendications**

1. Dispositif élévateur pour chargeurs de tracteurs agricoles à bras de levage, ledit dispositif étant monté en lieu et place d'un outil que comporte habituellement le chargeur et comprenant au moins une potence pour le support d'au moins sun organe mobile relié à un outil de préhension, cette potence étant directement articulée sur les bras du chargeur et maintenue sensiblement verticale sur ceux-ci, caractérisé en ce que l'organe mobile est une bascule (25, 25a, 25b) et cette bascule comprend au moins un cadre rigide allongé (bielles 16, 16a) disposé en position basse en porte à faux sur la potence (13), reposant alors sur ou butant contre une butée (traverse 14a, galet 49) de la potence même par un point intermédiaire de sa longueur l'extrémité éloignée visà-vis du tracteur de ce cadre allongé (16, 16a) portant l'outil de préhension (19) dans son entier, tandis que l'extrémité opposée tournée vers le tracteur est soit articulée (en 15) en permanence soit maintenue et guidée durant une partie de son mouvement le long d'un organe (13a, 46) qui fait substantiellement saillie vers le tracteur sur la partie haute de la potence, ladite bascule (25, 25a, 25b) étant en outre supportée sur un point de sa longueur entre ces deux extrémités du cadre allongé (16, 16a) et actionné par un vérin (31) relié à la potence (13) de sorte que ladite bascule fait pivoter l'outil de préhension (19) auquel elle est fixée et fait soulever ledit outil de préhension lors du développement du vérin (31)

2. Dispositif suivant la revendication 1, caractérisé en ce que la bascule (25) comporte au moins deux bielles (16, 21) articulées, d'une part, au bâti (18) de l'outil (19) et, d'autre part, à un balancier (22), lui-même articulé à l'extrémité d'un segment incliné (13a) de la potence (13) et à l'extrémité (33) du vérin (31) porté par la potence (13).

3. Dispositif suivant la revendication 1 ou 2, caractérisé par une entretoise réglable (28) disposée entre la bielle (16) et une butée (27) du bâti (18) de l'outil (19) de sorte que le basculement de l'outil par l'action du vérin (31) sur le balancier (22) est d'autant plus précoce que l'entretoise (28) est plus courte.

4. Dispositif suivant l'une des revendications 1 à 3, caractérisé en ce que l'entretoise (28) est constituée indifféremment par des ferrures présentant des trous pour l'engagement de broches, par une vis réglable ou par un vérin hydraulique.

5. Dispositif suivant l'une des revendications 1 à 4, caractérisé en ce que la bascule (25) comporte deux jeux de deux bielles (16, 21) respectivement reliées entre elles par des traverses (24) pour constituer des cadres rigides résistant à la torsion.

6. Dispositif suivant l'une des revendications 1 à 5, caractérisé en ce qu'il comporte deux potences reliées par des traverses (14, 14a, 14b,...14n) formant un bâti rigide fixé à sa partie basse par un attelage aux bras du chargeur (3) du tracteur (1).

7. Dispositif suivant l'une des revendications 1 à 6, caractérisé par au moins une bielle télescopique supplémentaire (56) articulée d'une part sur le bâti (18) de l'outil (19) au niveau de l'articulation de celle des bielles (21) qui est reliée au balancier (22), ladite bielle télescopique (56) étant par ailleurs articulée au sommet d'un segment montant (13b) prolongeant le segment incliné (13a) de la potence (13) pour constituer un parallélogramme avec la bielle qui est articulée sur l'axe (15) du balancier (22) et sur l'outil (19).

8. Dispositif suivant l'une des revendications 1 à 7, caractérisé en ce que la bielle télescopique (56) comporte un coulisseau (56b) entrant dans un fourreau (56a), la longueur respective du coulisseau (56b) et au fourreau (56a) faisant que le parallélogramme formé avec l'autre bielle (16) de la bascule (25a) maintient l'outil (19) à peu près horizontalement lorsque le vérin (31) est rétracté tandis que l'outil est basculé lorsque le vérin est partiellement développé et que le coulisseau (56b) est complètement introduit dans le fourreau (56a).

9. Dispositif suivant l'une des revendications 1 à 8, caractérisé en ce que la bielle télescopique (56) est de longueur équivalente à celle de la bielle (16) reliant l'outil (19) à l'articulation (15) du balancier (22) de sorte que l'outil est soulevé sans que son assiette soit modifiée lorsque le vérin (31) continue à être développé.

10. Dispositif suivant l'une des revendications 1 à 9, caractérisé en ce que la bielle télescopique (56) est articulée à l'outil (19) sur l'axe d'articulation (20) de la bielle (21), articulée sur l'axe (23) de l'extrémité du balancier (22), de sorte que le pivotement du balancier (22) par le vérin (31) provoque tout d'abord la levée de la bielle (21) provoquant le basculement de l'outil (19) avant le soulèvement

11. Dispositif suivant l'une des revendications 1 à 10, caractérisé par une traverse (14a) formant élément d'appui contre lequel repose la bascule (25) lorsque le vérin (31) est rétracté.

12. Dispositif suivant l'une des revendications 1 à 11, caractérisé par deux bielles télescopiques (56) disposées de part et d'autre des deux potences (13).

13. Dispositif suivant la revendication 1, caractérisé en ce que la bascule (25a) comporte deux bielles (16a) disposées entre deux potences (13) supportant un secteur circulaire (46) faisant saillie vers le tracteur (1) et contre lequel roule au moins un rouleau (50) porté par les bielles de la bascule qui délimitent une lumière (48) dans laquelle est passé un galet (49) porté par les potences qui supportent entre elles le vérin de basculement et de levée (31) relié auxdites bielles de façon que le développement du vérin provoque le basculement des bielles en faisant rouler les rouleaux (50) sur les secteurs circulaires (46) tandis que le galet (49) forme point d'appui pour lesdites bielles.

14. Dispositif suivant l'une des revendications 1 et 13, caractérisé en ce que les bielles (16a) de la bascule (25a) délimitent des rails creux (53) tandis que les potences (13) supportent a leur partie supérieure des galets (47) entrant dans le rail creux (53) de chaque bielle (16a) en fin de basculement de ces bielles de sorte que les bielles sont guidées simultanément et axialement par les galets (47) et le galet (49).

15. Dispositif suivant l'une des revendications 1, 13 et 14, caractérisé en ce que les bielles (16a) de la bascule (25a) sont directement reliées à l'outil (19).

16. Dispositif suivant l'une des revendications 1 et 13 à 15, caractérisé en ce que l'outil (19) est constitué par un ensemble de préhension comportant au moins deux bras pivotants (36, 37) montés sur un bâti (18) et actionnés par un vérin commun (40) pour provoquer le pivotement des bras suivant une amplitude limitée par deux jeux de butées de fin de course (43, 44).

17. Dispositif suivant l'une des revendications 1 et 13 à 16, caractérisé en ce que les bras (36, 37) sont munis de griffes (38, 39) qui sont courbées suivant un arc de cercle de même longueur que celui desdits bras.

## Patentansprüche

1. Hebevorrichtung für Lader an mit einem Hebearm versehenen Landwirtschafts-Traktoren, die an Stelle eines gewöhnlich zum Lader gehörenden Werkzeugs eingesetzt wird und mindestens einen Auslegerarm aufweist, der mindestens ein bewegliches, mit einem Greifwerkzeug verbundenes Glied trägt, wobei dieser Auslegermast unmittelbar an den Armen des Laders angelenkt ist und wesentlich senktrecht auf diesen Armen festfehalten wird, dadurch gekennzeichnet, daß das bewegliche Glied als eine Wippe (25, 25a, 25b) ausgebildet ist, die mindestens einen starren Rahmen (Pleuelstangen 16, 16a) umfaßt, der in seiner unteren Stellung überhängend auf dem Auslegerarm (13) angeordnet ist, so daß er auf bzw. an einem Anschlag (Querstück 14a, Rolle 49) des Auslegerarms selbst in einem auf dessen Länge dazwischenliegenden Punkt an liegt, wobei der dem Traktor abgewandte Endbereich dieses langen Rahmens (16, 16a) das gesamte Greifwerkzeug (19) trägt, während der entgegengesetzte, dem Traktor zugewandte Endbereich entweder stets angelenkt (in 15) ist oder auf einer Teilstrecke seiner Bewegung entlang eines Gliedes (13a, 46) gehalten und geführt ist, das am oberen Teil des Auslegerarmes in Richtung zum Traktor wesentlich vorspringt, wobei ferner, die Wippe (25, 25a, 25b) in einem auf ihrer Länge zwischen diesen beiden Enden des langen und einen mit dem Auslegerarm (13) verbundenen Arbeitszylinder (31) betätigten Rahmens (16, 16a) liegenden Punkt getragen wird, so dass die Wippe das mit ihr verbundene Greifwerkzeug (19) schwenkt und bei der Dehnung des Arbeitszylinders (31) dieses Greifwerkzeugs hebt.

2. Vorrichtung nach Anspruch 1, dadurch gekennzeichnet daß die Wippe (25) mindestens zwei Pleuelstangen (16, 21) aufweist die einerseits is am Gestell (18) des Werkzeugs (19) und andererseits an einem Schwengel (22) angelenkt sind, der seinerseits am Endbereich eines geneigten Abschnitts (13a) des Auslegerarm (13) und am Endbereich (33) des vom Auslegerarm (13) getragenen Arbeitszylinders (31) angelenkt ist.

3. Vorrichtung nach einem der Ansprüche 1 oder 2, gekennzeichnet durch eine einstellbare Verstärkungsstrebe (28), die zwischen der Pleuelstange (16) und einem Auschlag (27) des Gestells (18) des Werkzeugs (19) angeordnet ist, so daß die Schwenkung des Werkzeugs infolge der Betätigung des Schwengels (22) durch den Arbeitszylinder (31) um so frühzeitiger erfolgt, als die Verstärkungsstrebe kürzer ist.

4. Vorrichtung nach einem der Ansprüche 1 bis 3, dadurch gekennzeichnet, daß die Verstärkungsstrebe (28) entweder aus Beschlägen mit Löchern zum Einsetzen von Spindeln oder aus einer einstellbaren Schraube oder aus einem Arbeitszylinder bestehen kann.

5. Vorrichtung nach einem der Ansprüche 1 bis 4, dadurch gekennzeichnet, daß die Wippe (25) zwei Sätze von jeweils zwei Pleuelstangen (16, 21) aufweist, die aneinander durch Querstücke (24) verbunden sind, um biegefeste Rahmen zu bilden.

6. Vorrichtung nach einem der Ansprüche 1 bis 5, dadurch gekennzeichnet dass sie zwei Auslegerarme aufweist, die durch Querstücke (14, 14a, 14b, ..., 14n) verbunden sind, welche einen starren Rahmen bilden, der an seinem unteren Teil durch eine Kupplung an den Armen des Laders (3) des Traktors (1) befestigt ist.

7. Vorrichtung nach einem der Ansprüche 1 bis 6, gekennzeichnet durch mindestens eine zusätzliche teleskopische Pleuelstange (56), die einerseits am Gestell (18) des Werkzeugs (19) am Gelenk der mit dem Schwengel (22) verbundenen Pleuelstange (21) angelenkt ist, wobei diese teleskopische Pleuelstange (56) andererseits am Endbereich eines aufsteigenden Abschnitts (13b) angelenkt ist, der sich als Verlängerung dem geneigten Abschnitt (13a) des Auslegerarms (13) anschliesst, um mit der an der Achse (15) des Schwengels (22) und am Werkzeug (19) angelenkten Pleuelstange ein Parallelogramm bildet.

8. Vorrichtung nach einem der Ansprüche 1 bis 7, dadurch gekennzeichnet, dass die teleskopische Pleuelstange (56) einen Schieber (56b) aufweist, der in eine Scheide (56a) eindringt, wobei das Längenverhältnis des Schiebers (56b) und der Scheide (56a) so gewählt ist, daß das mit der anderen Pleuelstange (16) der Wippe (25a) gebildete Parallelogramm das Werkzeug (19) in einer wesentlich waagerechten Lage festhält, wenn der Arbeitszylinder (31) zurückgezogen ist, während das Werkzeug schwenkt, wenn der Arbeitszylinder teilweise gedehnt und der Schieber (56b) vollständig in die Scheibe (56a) eingeschoben ist.

9. Vorrichtung nach einem der Ansprüche 1 bis 8, dadurch gekennzeichnet, daß die Länge der teleskopischen Pleuelstange (56) der Länge der das Werkzeug (19) mit dem Gelenk (15) des Schwengels (22) verbindenden Pleuelstange (16) entspricht, so daß wenn sich der Arbeitszylinder (31) weiter dehnt, das Werkzeug gehoben wird, ohne dass sein Sitz geändert wird.

10. Vorrichtung nach einem der Ansprüche 1 bis 9, dadurch gekennzeichnet, dass die teleskopische Pleuelstange (56) am Werkzeug (19) auf dem Gelenkachse (20) der Pleuelstange (21) angelenkt ist, die ihrerseits an der Achse (23) des Endes des Schwengels (22) angelenkt ist, so daß das Schwenken des durch den Arbeitszylinder (31) betätigten Schwengels (22) zunächst das Heben der Pleuelstange (21) und das Schwenken des Werkzeugs (19) vor dem Heben bewirkt.

11. Vorrichtung nach einem der Ansprüche 1 bis 10, gekennzeichnet durch ein Querstück (14a) als Stützelement, an dem sich die Wippe (25) beim zurückgezogenen Arbeitszylinder (31) abstützt.

12. Vorrichtung nach einem der Ansprüche 1 bis 11, dadurch gekennzeichnet daß sie zwei teleskopischen Pleuelstangen (56) aufweist, die beiderseits der zwei Auslegerarme (13) angeordnet sind.

13. Vorrichtung nach Anspruch 1, dadurch gekennzeichnet, daß die Wippe (25a) zwei Pleuelstangen (16a) aufweist, die zwischen zwei Auslegerarmen (13) angeordnet sind, die einen kreisbogenförmigen Abschnitt (46) tragen der in Richtung zum Traktor (1) vorspringt und an welchen mindestens eine Rolle (50) rollt, die durch die Pleuelstangen der Wippe getragen wird, die eine Öffnung (48) begrenzen, durch welche eine Rolle (49) geführt wird, welche den die Schwenk-und Hebebewegung steuernden Arbeitszylinder (31) tragen, der mit den Pleuelstangen so verbunden ist, dass die Dehnung des Arbeitszylinders das Schwenken der Pleuelstangen bewirkt, indem die Rollen (50) entlang der kreisförmigen Abschnitte (46) rollen, während die Rolle (49) als Stützpunkt für die Pleuelstangen wirkt.

14. Vorrichtung nach einem der Ansprüche 1 und 13, dadurch gekennzeichnet, daß die Pleuelstangen (16a) der Wippe (25a) Hohlschienen (53) ausbilden, während die Auslegerarme (13) an ihrem oberen Teil Rollen (47) tragen, die am Ende der Schwenkbewegung der Pleuelstangen in die Hohlschiene (53) jeder Pleuelstange (16a) eindringen, so daß die Pleuelstangen gleichzeitig axial durch die Rollen (47) und die Rolle (49) geführt werden.

15. Vorrichtung nach einem der Ansprüche 1, 13 und 14, dadurch gekennzeichnet daß die Pleuelstangen (16a) der Wippe (25a) unmittelbar mit dem Werkzeug (19) verbunden sind.

16. Vorrichtung nach einem der Ansprüche 1 und 13 bis 15, dadurch gekennzeichnet, daß das Werkzeug (19) als Greifwerkzeug ausgebildet ist, das mindestens zwei schwenkbare, auf einem Gestell (18) angeordnete und durch einen gemeinsamen Arbeitszylinder (40) betätigte Arme (36, 37) aufweist, so dass die Schwenkbewegung der Arme begrenzt zwischen zwei Sätzen von Endanschlägen (43, 44) erfolgt.

17. Vorrichtung nach einem der Ansprüche 1 und 13 bis 16, dadurch gekennzeichnet, daß die Arme (36, 37) mit Klauen (38, 39) versehen sind, die entlang eines Kreisbogens gekrümmt sind, dessen Länge der Länge der Arme entspricht.

**Claims**

1. Elevation device for loaders of agricultural tractors with a lifting arm, said device being mounted instead of a tool that includes habitually the loader and comprising at least one bracket for the support of at least one mobile member connected to a gripping tool, this bracket being directly articulated on the arms of the loader and kept substantially vertical thereto, characterized in that the mobile member is a swing member (25, 25a, 25b) and this swing member includes at least one elongated rigid frame (connecting rods 16, 16a) disposed in their lower position overhanging on the bracket (13), bearing then on or abutting against an abutment (crossbar 14a,

of the bracket itself by a point intermediate its length, the remote end with respect to the tractor of this elongated frame (16, 16a) supporting the gripping tool (19) as a whole, while the opposite end turned toward the tractor is either articulated (at 15) permanently or maintained and guided during a portion of its movement along a member (13a, 46) which is substantially protruding toward the tractor on the upper portion of the bracket, said swing member (25, 25a, 35b) being moreover supported on one point of its length between these two ends of the elongated frame (16, 16a) and actuated by a cylinder (31) connected to the bracket (13) so that said swing member pivots the gripping tool (19) to which it is fixed and has said lifting tool lifted during the extension of the cylinder (31).

2. Device according to claim 1, characterized in that the swing member (25) includes at least two connecting rods (16, 21) articulated, on the one hand, to the frame (18) of the tool (19) and, on the other hand, to a rocking lever (22), which is in turn articulated at the end of an inclined segment (13a) of the bracket (13) and, at the end (33) of the cylinder (31) carried by the bracket (13).

3. Device according to claim 1 or 2, characterized by an adjustable strut (28) disposed between the connecting rod (16) and an abutment (27) of the frame (18) of the tool (19) so that the tilting of the tool due to the action of the cylinder (31) on the rocking lever (22) is all the more early as the strut (28) is shorter.

4. Device according to one of claims 1 to 3, characterized in that the brace (28) is made indifferently of iron fittings formed with holes for the engagement of spindles, of a set table screw or of a hydraulic cylinder.

5. Device according to one of claims 1 to 4, characterized in that the swing member (25) includes two sets of two connecting rods (16, 21) respectively connected together by crosspieces (24) for forming rigid frames resisting to the torsion.

6. Device according to one of claims 1 to 5, characterized in that it includes two brackets connected by crossbars (14, 14a, 14b,... 14n) forming a rigid frame fixed at its lower portion by a hitch to the arms of the loader (3) of the tractor (1).

7. Device according to one of claims 1 to 6, characterized by at least one extra telescopic connecting rod (56) articulated on the one hand, on the frame (18) of the tool (19) at the level of the articulation of that of the connecting rods (21) which is connected to the rocking lever (22), said telescopic connecting rod (56) being, on the other hand, articulated at the top of an ascending segment (13b) prolongating the inclined segment (13a) of the bracket (13) for constituting a parallelogram with the connecting rod which is articulated on the pin (15) of the rocking lever (22) and on the tool (19).

8. Device according to one of claims 1 to 7, characterized in that the telescopic connecting rod (56) includes a slide (56b) coming into a sheath (56a), the respective length of the slide (56b) and of the sheath (56a) being such that the parallelogram formed with the other connecting rod (16) of the swing member (25a) maintains the tool (19) more or less horizontally when the cylinder (31) is retracted while the tool is tilted when the cylinder is partially extended and when the slide (56b) is completely introduced in the sheath (56a).

9. Device according to one of claims 1 to 8, characterized in that the telescopic connecting rod (56) has a length equivalent to that of the connecting rod (16) connecting the tool (19) to the articulation (15) of the rocking lever (22) so that the tool is lifted without its trim being modified when the cylinder (31) is further extended.

10. Device according to one of claims 1 to 9, characterized in that the telescopic connecting rod (56) is articulated to the tool (19) on the articulation pin (20) of the connecting rod (21), articulated on the pin (23) of the end of the rocking lever (22), so that the pivoting of the rocking lever (22) by the cylinder (31) causes first of all the lifting of the connecting rod (21) causing the tilting of the tool (19) prior to the lifting.

11. Device according to one of claims 1 to 10, characterized by a crossbar (14a) forming a bearing element against which bears the swing member (25) when the cylinder (31) is retracted.

12. Device according to one of claims 1 to 11, characterized by two telescopic connecting rods (56) disposed on either side of the two brackets (13).

13. Device according to claim 1, characterized in that the swing member (25a) includes two connecting rods (16a) disposed between two brackets (13) supporting a circular sector (46) protruding toward the tractor (1) and against which rolls at least one roller (50) carried by the connecting rods of the swing member which define an opening (48) through which extends a roller (49) carried by the brackets which support between themselves the tilting and lifting cylinder (31) connected to said connecting rods in such manner that the extension of the cylinder causes the tilting of the connecting rods by having the rollers (50) rolling on the circular sectors (46) while the roller (49) forms a fulcrum for said connecting rods.

14. Device according to one of claims 1 and 13, characterized in that the connecting rods (16a) of the swing member (25a) define hollow rails (53) while the brackets (13) support at their upper portion rollers (47) coming in the hollow rail (53) of each connecting rod (16a) at the end of the tilting movement of these connecting rods so that the connecting rods are guided simultaneously and axially by the rollers (47) and the roller (49).

15. Device according to one of claims 1, 13 and 14, characterized in that the connecting rods (16a) of the swing member (25a) are directly connected to the tool (19).

16. Device according to one of claims 1 and 13 to 15, characterized in that the tool (19) is made of a gripping assembly including at least two pivoting arms (36, 37) mounted on a frame (18) and actuated by a common cylinder (40) for causing the pivoting of the arms according to an amplitude limited by two sets of end of stroke abutments (43, 44).

17. Device according to one of claims 1 and 13 to 16, characterized in that the arms (36, 37) are provided with claws (38, 39) which are curved according to an arc of a circle of same length as that of said arms.

FIG.1

Fig.3

Fig.2

FIG.4

# FIG.5

Fig. 7

Fig. 6

# Fig. 8

# Fig. 9

0 185 826

FIG.11

FIG.10

13